# EUROPÄISCHE PATENTSCHRIFT

(11) **EP 1 418 302 B1**
(45) Veröffentlichungstag und Bekanntmachung des Hinweises auf die Patenterteilung: **10.08.2005**
(21) Anmeldenummer: 03024212.7
(22) Anmeldetag: 21.10.2003
(51) Int. Cl.: E05B 71/00, B62H 5/14

(54) **Rahmenschloss**
Lock for frames
Serrure d'encerclement

(30) Priorität: 08.11.2002 DE 10252080
(43) Veröffentlichungstag der Anmeldung: 12.05.2004
(73) Patentinhaber: ABUS August Bremicker Söhne KG, 58292 Wetter (DE)
(72) Erfinder:
(74) Vertreter: Manitz, Finsterwald & Partner GbR

(56) Entgegenhaltungen:
- EP-A- 0 083 798
- EP-A- 0 550 795
- DE-A- 3 212 281
- DE-A- 19 803 307
- GB-A- 1 555 383

## Beschreibung

Die Erfindung betrifft ein Rahmenschloss für ein Zweirad, insbesondere für ein Fahrrad. Ein derartiges Rahmenschloss (siehe z.B. Document EP-A-0 550 795) besitzt üblicherweise einen Lagerschenkel und einen Aufnahmeschenkel, die gemeinsam einen Schließbereich des Rahmenschlosses zur Aufnahme eines Speichenrads des Zweirads umgeben. In oder an dem Lagerschenkel ist ein Rundbügel gelagert, der zwischen einer Freigabestellung und einer Schließstellung bewegt werden kann. In der Freigabestellung des Rundbügels ist der Schließbereich des Rahmenschlosses freigegeben. In der Schließstellung hingegen durchquert der Rundbügel den Schließbereich und wird von dem Aufnahmeschenkel aufgenommen. Dadurch ist das in dem Schließbereich aufgenommene Speichenrad blockiert, und das Zweirad ist somit gegen einen unbefugten Gebrauch gesichert.

Derartige Rahmenschlösser besitzen ferner eine Verriegelungseinrichtung, mittels derer der Rundbügel wahlweise verriegelt oder für eine Bewegung freigegeben werden kann. Eine solche Verriegelungseinrichtung kann beispielsweise einen Schließzylinder sowie einen hiermit gekoppelten Riegel aufweisen, der mit dem Rundbügel zusammenwirkt.

Es sind Rahmenschlösser der erläuterten Art bekannt, die ferner eine Klobenaufnahme besitzen, in die ein Kloben eines Sicherungsseils eingeführt werden kann. Ein solches Sicherungsseil ermöglicht es, das Zweirad an einem Befestigungsobjekt - beispielsweise einem Laternenpfosten - zu befestigen und dadurch gegen eine Entnahme zu sichern. Zu diesem Zweck kann ein Sicherungselement zwischen einer Freigabestellung, in der der Kloben aus der Klobenaufnahme entnommen werden kann, und einer Schließstellung bewegt werden, in der das Sicherungselement den Kloben in der Klobenaufnahme sichert.

Hierfür ist es bekannt, über eine Kopplungsmechanik auch das Sicherungselement mit der genannten Verriegelungseinrichtung des Rahmenschlosses zu koppeln, so dass bei einer Freigabebetätigung der Verriegelungseinrichtung nicht nur der Rundbügel entriegelt wird, sondern automatisch auch das Sicherungselement für den Kloben in die Freigabestellung bewegt wird. Eine derartige zusätzliche Ankopplung des Kloben-Sicherungselements an die Rundbügel-Verriegelungseinrichtung ist jedoch aufwendig. Aufgrund der direkten Kopplung des Kloben-Sicherungselements mit der Verriegelungseinrichtung besteht außerdem die Gefahr einer Manipulation der Bügelverriegelung, falls kein Kloben in die Klobenaufnahme eingeführt ist und das Kloben-Sicherungselement somit von außen zugänglich ist. Ferner erfordert die genannte Kopplungsmechanik einen erhöhten Platzbedarf, da für die Kopplung des Kloben-Sicherungselements mit der Verriegelungseinrichtung letztlich mehrere Umlenkungen erforderlich sind.

Eine Aufgabe der Erfindung besteht deshalb darin, ein Rahmenschloss für ein Zweirad zu schaffen, das bei einem einfachen und zuverlässigen Aufbau zusätzlich zu dem Verriegeln eines Rundbügels das Sichern eines Klobens eines Sicherungsseils ermöglicht.

Diese Aufgabe wird durch ein Rahmenschloss mit den Merkmalen des Anspruchs 1 gelöst, und insbesondere dadurch, dass an dem Rundbügel wenigstens ein Zwangsführungsabschnitt ausgebildet ist, der bei einer Bewegung des Rundbügels eine Bewegung des Sicherungselements in die Freigabestellung oder in die Schließstellung bewirkt.

Bei diesem Rahmenschloss ist also ein Zwangsführungsabschnitt an dem Rundbügel vorgesehen, der unmittelbar mit dem Sicherungselement für das Freigeben oder Sichern des Klobens zusammenwirkt. Die Betätigung des Sicherungselements erfolgt somit nicht direkt durch die Rundbügel-Verriegelungseinrichtung, also beispielsweise nicht durch einen direkt mit dem Kloben-Sicherungselement gekoppelten Schließzylinder. Stattdessen wird eine Bewegung des Kloben-Sicherungselements in seine Freigabestellung oder Schließstellung indirekt über eine Bewegung des Rundbügels ausgelöst. Das für das Blockieren und Freigeben des Klobens vorgesehene Sicherungselement ist also mit dem Rundbügel gekoppelt.

Diese Kopplung von Sicherungselement und Rundbügel über einen Zwangsführungsabschnitt des Rundbügels ermöglicht einen einfachen und kompakten Aufbau des Rahmenschlosses, da keine aufwändige Kopplungsmechanik zur Verbindung des Sicherungselements mit der Rundbügel-Verriegelungseinrichtung bzw. einem Schließzylinder erforderlich ist. Da der Rundbügel - als das zentrale Bauelement des Rahmenschlosses - das Kloben-Sicherungselement unmittelbar antreibt, ist eine hohe Funktionszuverlässigkeit der Klobenverriegelung gewährleistet. Das Sicherungselement und die hierfür vorgesehene Führung können einen einfachen massiven Aufbau besitzen, so dass das Sicherungselement unempfindlich gegenüber einer oftmaligen Benutzung oder einer möglichen Verschmutzung ist.

Ein weiterer Vorteil der Erfindung besteht darin, dass die Rundbügel-Verriegelungseinrichtung nicht besonders modifiziert werden muss, um die zusätzliche Funktionalität der Klobenverriegelung zu ermöglichen. Stattdessen kann für die Verriegelung des Rundbügels ein herkömmlicher Schließzylinder verwendet werden.

Das im Zusammenhang mit dem erfindungsgemäßen Rahmenschloss genannte Sicherungsseil ist nicht unbedingt Teil des Rahmenschlosses, sondern kann eine hiervon unabhängige Einheit sein. Die Erfindung erstreckt sich jedoch auch auf ein Zweirad-Sicherungssystem mit einem Rahmenschloss der erläuterten Art und mit einem Sicherungsseil, dessen Kloben zur Sicherung an dem Rahmenschloss vorgesehen ist. Bei dem Sicherungsseil kann es sich beispielsweise um ein Stahlseil, ein Seil mit gehärteten Hülsen, ein Spiralkabel, eine Kette oder einen Gelenkstabbügel handeln. Das dem Kloben gegenüberliegende Ende des Sicherungsseils kann als Schlaufe ausgebildet sein, die die Ausbildung einer Schlinge zum Umgreifen des Befestigungsobjekts, beispielsweise eines Laternenpfostens, ermöglicht. Es ist auch möglich, dass das dem Kloben gegenüberliegende Ende des Sicherungsseils an dem Rahmenschloss oder am Rahmen des Zweirads dauerhaft befestigt ist, so dass im erstgenannten Fall das Rahmenschloss und das Sicherungsseil eine einzige Einheit bilden.

Der an dem Rundbügel ausgebildete Zwangsführungsabschnitt kann beispielsweise einen Übergang zwischen einer Ausnehmung und einer Erhöhung des Rundbügels aufweisen. Sofern im Zusammenhang mit der Erfindung eine Ausnehmung (oder Freigabeausnehmung) und eine Erhöhung (oder Rückhalteerhöhung) des Rundbügels genannt sind, ist lediglich die Relativhöhe, also der Höhenunterschied zwischen der Ausnehmung und der Erhöhung von Bedeutung. Es ist also nicht erforderlich, dass an dem Rundbügel sowohl eine Ausnehmung gegenüber der regulären Materialstärke, als auch eine Erhöhung gegenüber der regulären Materialstärke des Rundbügels vorgesehen ist. Insbesondere ist es ausreichend, wenn eine Ausnehmung an dem Rundbügel ausgebildet ist und die "Erhöhung" demgegenüber der regulären Materialstärke entspricht.

Weiterhin ist es von Vorteil, wenn das Sicherungselement durch eine Feder vorgespannt ist. In diesem Fall kann nämlich der Kloben des Sicherungsseils auf einfache Weise an dem Sicherungselement innerhalb der Klobenaufnahme verrastet werden, sobald das Sicherungselement für eine Schließbewegung freigegeben ist. Alternativ hierzu ist es jedoch auch möglich, dass der Zwangsführungsabschnitt des Rundbügels eine Kulisse aufweist, mittels derer das Sicherungselement letztlich sowohl in Richtung der Schließstellung, als auch in Richtung der Freigabestellung angetrieben werden kann.

Gemäß einer ersten Ausführungsform wirkt der Zwangsführungsabschnitt des Rundbügels mit dem Sicherungselement dergestalt zusammen, dass das Sicherungselement für eine Bewegung in die Schließstellung freigegeben wird, wenn der Rundbügel in die Schließstellung bewegt wird, und dass das Sicherungselement in die Freigabestellung bewegt wird, wenn der Rundbügel in die Freigabestellung bewegt wird. Wenn also der Rundbügel in die Schließstellung gebracht wird, so ist auch der Kloben des Sicherungsseils verriegelt oder in der Klobenaufnahme verriegelbar. Wenn der Rundbügel den Schließbereich des Rahmenschlosses freigibt, so wird auch der Kloben aus der Klobenaufnahme freigegeben.

Diese erste Ausführungsform hat also den Vorteil, dass der Kloben nur dann an dem Rahmenschloss gesichert werden kann, wenn auch der Rundbügel geschlossen ist. Dadurch wird verhindert, dass der Benutzer den Kloben an dem Rahmenschloss sichert und dabei vergisst, auch den Rundbügel zu schließen.

Gemäß einer zweiten Ausführungsform wirken zwei Zwangsführungsabschnitte des Rundbügels mit dem Sicherungselement dergestalt zusammen, dass das Sicherungselement für eine Bewegung in die Schließstellung freigegeben wird, wenn der Rundbügel in seine Schließstellung oder seine Freigabestellung bewegt wird, und dass das Sicherungselement jedoch in die Freigabestellung bewegt wird, wenn der Rundbügel in eine Zwischenstellung zwischen der Schließstellung und der Freigabestellung bewegt wird. Mit anderen Worten wird hier der Kloben durch eine Bewegung des Rundbügels zwischen der Freigabestellung und der Schließstellung für eine Entnahme aus der Klobenaufnahme freigegeben. Somit ist es möglich, den Kloben auch dann an dem Rahmenschloss zu sichern, wenn der Rundbügel geöffnet ist.

Gemäß einer dritten Ausführungsform kann der Rundbügel über die Schließstellung oder die Freigabestellung hinaus in eine Klobenentriegelungsstellung bewegt werden, und der Zwangsführungsabschnitt des Rundbügels wirkt mit dem Kloben-Sicherungselement dergestalt zusammen, dass das Sicherungselement nur dann aus der Schließstellung in die Freigabestellung bewegt wird, wenn der Rundbügel in die Klobenentriegelungsstellung bewegt wird. Diese Ausführungsform hat den Vorteil, dass der Kloben sowohl in der Schließstellung als auch in der Freigabestellung des Rundbügels an dem Rahmenschloss gesichert werden kann, ohne dass eine Bewegung des Rundbügels zwischen der Schließstellung und der Freigabestellung zu einem unbeabsichtigten Freigeben des Klobens aus der Klobenaufnahme führt.

Gemäß einer vorteilhaften Weiterbildung der vorgenannten Ausführungsformen kann die Klobenaufnahme eine Rasteinrichtung aufweisen, an der der in die Klobenaufnahme eingeführte Kloben verrastet werden kann. Dadurch kann ein unverwünschtes Herausfallen des Klobens aufgrund einer versehentlichen oder zwischenzeitlichen Freigabebetätigung des Sicherungselements verhindert werden. Diese Rasteinrichtung kann beispielsweise eine rückfedernde Haltekante aufweisen, die in entspanntem Zustand eine ovale Form besitzt und somit den Kloben elastisch umschließt.

Weitere Ausführungsformen der Erfindung sind in den Unteransprüchen genannt. Die Erfindung wird nachfolgend beispielhaft unter Bezugnahme auf die Zeichnungen beschrieben; in diesen zeigen:
- Fig. 1a und 1b: eine erste Ausführungsform eines Rahmenschlosses, wobei der Rundbügel sich in der Schließstellung beziehungsweise der Freigabestellung befindet,
- Fig. 2: eine zweite Ausführungsform eines Rahmenschlosses, wobei der Rundbügel sich in der Freigabestellung befindet, und
- Fig. 3a, 3b und 3c: eine dritte Ausführungsform eines Rahmenschlosses, wobei der Rundbügel sich in der Freigabestellung, der Schließstellung bzw. der Klobenentriegelungsstellung befindet.

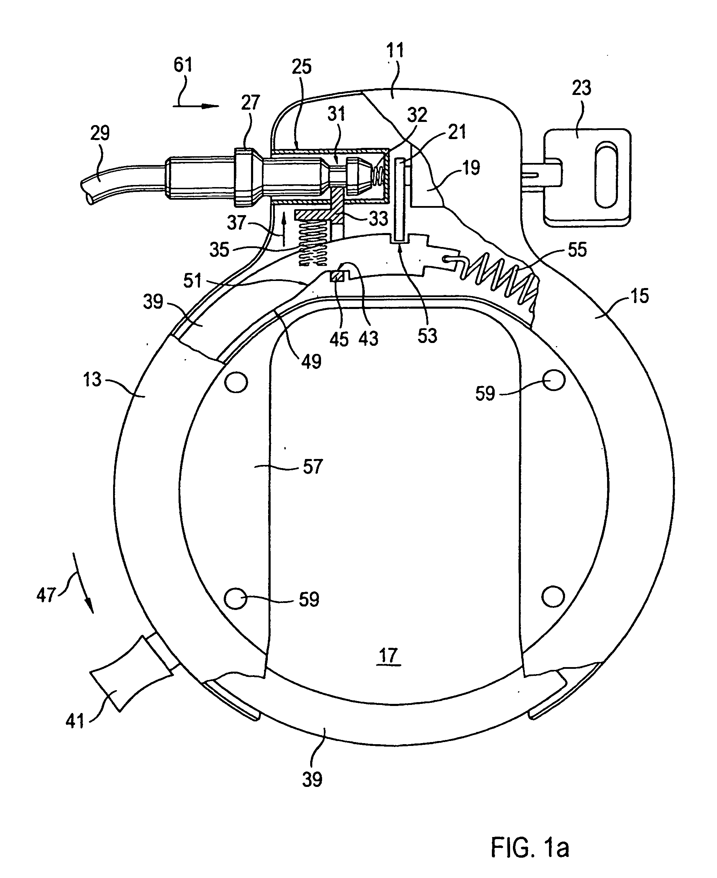

Fig. 1a zeigt in einer teilweise aufgebrochenen Vorderansicht den prinzipiellen Aufbau einer ersten Ausführungsform eines Rahmenschlosses. Dieses Rahmenschloss wird beispielsweise an die Hintergabel eines Fahrrads (in den Figuren nicht gezeigt) montiert. Dort ermöglicht das Rahmenschloss ein Blockieren des hinteren Speichenrads dieses Fahrrads, um eine unbefugte Fahrt mit dem Fahrrad zu verhindern.

Das Rahmenschloss besitzt ein Gehäuse mit einem Basisabschnitt 11, an den sich ein Lagerschenkel 13 und ein Aufnahmeschenkel 15 des Gehäuses anschließen. Der Lagerschenkel 13 und der Aufnahmeschenkel 15 bilden gemeinsam im Wesentlichen eine Hufeisenform, und sie umschließen einen Schließbereich 17 des Rahmenschlosses. In diesen ragt ein Teil des Hinterrads hinein, falls das Rahmenschloss - wie erläutert - an der Hintergabel eines Fahrrads montiert ist.

Innerhalb des Basisabschnitts 11 ist ein Schließzylinder 19 angeordnet, der mit einem Bügelriegel 21 gekoppelt ist. Der Schließzylinder 19 und somit der Bügelriegel 21 können mittels eines Schlüssels 23 betätigt werden.

Ferner ist innerhalb des Basisabschnitts 11 eine im Wesentlichen hohlzylindrische Klobenaufnahme 25 ausgebildet. In diese ragt ein Kloben 27 eines Sicherungsseils 29 ein, der an seiner Vorderseite mit einer Ringnut 31 versehen ist. Der Kloben 27 liegt mit seiner Vorderseite an einer Auswurffeder 32 an, die an der Stirnseite der Klobenaufnahme 25 dauerhaft befestigt, beispielsweise verschweißt oder vernietet ist.

Ein Klobenriegel 33 greift in die Klobenaufnahme 25 und dort in die Ringnut 31 des Klobens 27 ein. Der Klobenriegel 33 ist mittels einer Druckfeder 35 entlang einer Vorspannrichtung 37 vorgespannt.

Innerhalb des Lagerschenkels 13 befindet sich ein Rundbügel 39. In der in Fig. 1a gezeigten Schließstellung des Rundbügels 39 ragt ein Ende des Rundbügels 39 in den Basisabschnitt 11 hinein, und das andere Ende erstreckt sich quer durch den Schließbereich 17, so dass seine Spitze innerhalb des Aufnahmeschenkels 15 aufgenommen wird. An dem Rundbügel 39 ist eine Handhabe 41 dauerhaft befestigt, beispielsweise verschweißt. Die Handhabe 41 ragt durch einen seitlichen Führungsschlitz (in den Figuren nicht ersichtlich) aus dem Lagerschenkel 13 heraus.

An dem sich entlang des Basisabschnitts 11 erstreckenden Ende des Rundbügels 39, und zwar an der Innenseite des Rundbügels 39, ist eine Freigabeausnehmung 43 ausgebildet. An dieser Freigabeausnehmung 43 liegt ein Kopplungshaken 45 des Klobenriegels 33 an. Bezüglich einer Schließrichtung 47 benachbart zu der Freigabeausnehmung 43 weist der Rundbügel 39 eine Rückhalteerhöhung 49 auf, die letztlich der regulären Materialstärke des Rundbügels 39 entspricht, aber relativ zu der Freigabeausnehmung 43 bezüglich der Vorspannrichtung 37 des Klobenriegels 33 höhenversetzt ist. Der Übergang zwischen der Freigabeausnehmung 43 und der hierzu benachbarten Rückhalteerhöhung 49 bildet einen schrägen Zwangsführungsabschnitt 51.

An dem in den Basisabschnitt 11 hineinragenden Ende des Rundbügels 39 ist außerdem eine Sperrnut 53 ausgebildet, in die der Bügelriegel 21 eingreift. Ferner ist dieses Ende mit einer Zugfeder 55 verbunden, die den Rundbügel 39 entgegen der Schließrichtung 47 vorspannt.

Das gezeigte Rahmenschloss ist außerdem mit Versteifungsflächen 57 versehen. Ferner sind Verbindungsnieten 59 dargestellt, die einen oberen und einen unteren Gehäuseteil miteinander verbinden (in den Figuren nicht detailliert gezeigt).

Das in Fig. 1a gezeigte Rahmenschloss dient generell dazu, das in dem Schließbereich 17 befindliche Speichenrad wahlweise blockieren zu können, nämlich indem der Rundbügel 39 den Schließbereich 17 durchquert und somit zwischen zwei benachbarten Speichen des Speichenrads verläuft.

Um ein derartig blockiertes Speichenrad wieder freizugeben, wird der Rundbügel 39 von der in Fig. 1a gezeigten Schließstellung entgegen der Schließrichtung 47 in eine Freigabestellung bewegt. Zu diesem Zweck wird der Schließzylinder 19 mittels des Schlüssels 23 drehbetätigt. Diese Drehbestätigung wird - beispielsweise über Exzenterkopplung - in eine Schiebebewegung des Bügelriegels 21 umgewandelt, so dass der Bügelriegel 21 aus der Sperrnut 23 des Rundbügels 39 herausgezogen wird. Die Zugfeder 55 zieht den somit freigegebenen Rundbügel 39 in Richtung des Aufnahmeschenkels 15, so dass der Rundbügel 39 den Schließbereich 17 freigibt.

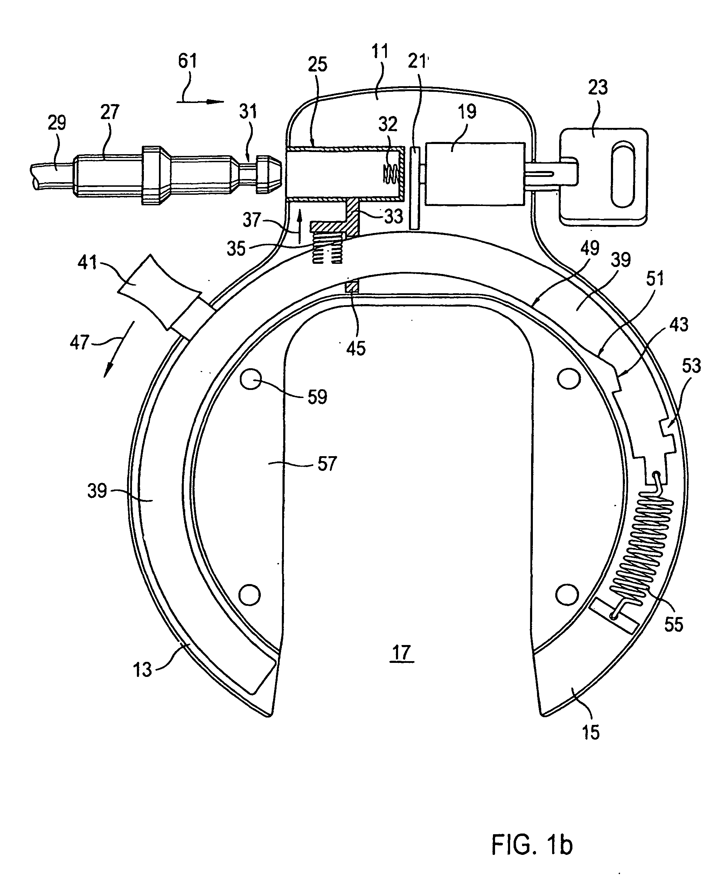

Fig. 1b zeigt in einer vollständig aufgebrochenen Vorderansicht das Rahmenschloss in der somit eingenommenen Freigabestellung des Rundbügels 39. Falls nachfolgend der Rundbügel 39 wieder in die Schließstellung überführt werden soll, wird der Rundbügel 39 mittels der Handhabe 41 entgegen der Zugkraft der Zugfeder 55 in Schließrichtung 47 bewegt. In der somit eingenommenen Schließstellung wird der Rundbügel 39 gesichert, indem der Bügelriegel 21 wieder in die Sperrnut 53 eingreift. Hierbei kann - abweichend von der vereinfachten Darstellung gemäß Fig. 1a-auch ein automatisches Einrasten des Bügelriegels 21 vorgesehen sein.

Zusätzlich zu dem erläuterten Blockieren des Schließbereichs 17 ermöglicht das in den Fig. 1a und 1b gezeigte Rahmenschloss das Sichern oder Fixieren des Klobens 27 an dem Rahmenschloss. Dadurch kann das Fahrrad mittels des Sicherungsseils 29 beispielsweise an einem Befestigungsobjekt, wie einem Latemenpfosten gesichert werden. Für diese zusätzliche Sicherungsfunktion wird der Kloben 27, während der Rundbügel 39 sich in der Schließstellung gemäß Fig. 1a befindet, entlang einer Einführrichtung 61 in die Klobenaufnahme 25 eingeführt. Am Ende dieses Einführvorgangs verdrängt der Kloben 27 mit seinem konischen Vorderende kurzzeitig den Klobenriegel 33 entgegen der Vorspannrichtung 37, und der Druck der Auswurffeder 32 muss überwunden werden. Sobald der Kloben 27 vollständig in die Klobenaufnahme 25 eingeführt worden ist, schnappt der Klobenriegel 33 aufgrund der von der Druckfeder 35 ausgeübten Druckkraft zurück in die Klobenaufnahme 25 und steht somit in Eingriff mit der Ringnut 31.

Der Klobenriegel 33 befindet sich nun in seiner Schließstellung, und der Kloben 27 ist innerhalb der Klobenaufnahme 25 fixiert. Dieses Eingreifen des Klobenriegels 33 in die Klobenaufnahme 25 ist deshalb möglich, weil in der Schließstellung des Rundbügels 39 der Kopplungshaken 25 des Klobenriegels 33 in die Freigabeausnehmung 43 des Rundbügels 39 eintreten kann.

Sobald der Rundbügel 39 ausgehend von der Schließstellung gemäß Fig. 1a in die Freigabestellung gemäß Fig. 1b bewegt wird, wird der Kopplungshaken 45 entlang des schrägen Zwangsführungsabschnitts 51 entgegen der Vorspannrichtung 37 zurückgezogen und nachfolgend an der Rückhalteerhöhung 49 des Rundbügels 39 in der zurückgezogenen Stellung gehalten. Dadurch gerät auch der Klobenriegel 33 außer Eingriff mit der Ringnut 31 des Klobens 27 und befindet sich somit in seiner Freigabestellung. In diesem Zustand sorgt die Auswurffeder 32 dafür, dass der Kloben 27 zumindest zu einem Teil entgegen der Einführrichtung 61 aus der Klobenaufnahme 25 gezwängt wird. Der Kloben 27 kann nun aus der Klobenaufnahme 25 entnommen werden.

Wenn nachfolgend der Rundbügel ausgehend von der Freigabestellung gemäß Fig. 1b wieder zurück in die Schließstellung gemäß Fig. 1a überführt wird, gerät der Kopplungshaken 45 entlang des Zwangsführungsabschnitts 51 zurück in die Freigabeausnehmung 43, wobei die Druckfeder 35 den Klobenriegel 33 zurück in seine Schließstellung bewegt. Der Kloben 27 kann nun wieder auf die erläuterte Weise in der Klobenaufnahme 25 gesichert werden.

Somit kann bei dieser ersten Ausführungsform der Kloben 27 nur dann in der Klobenaufnahme 25 gesichert werden, wenn auch der Rundbügel 39 vollständig geschlossen ist, wie in Fig. 1a gezeigt. Dadurch wird verhindert, dass der Benutzer des Rahmenschlosses lediglich den Kloben 27 an dem Rahmenschloss fixiert und dabei vergisst, auch den Rundbügel 39 zu schließen.

Zu der ersten Ausführungsform gemäß Fig. 1a und 1b ist noch anzumerken, dass die Auswurffeder 32 nicht zwingend erforderlich ist. Allerdings unterstützt sie die Ertastbarkeit des Verriegelungszustands des Klobens 27 für den Benutzer. Außerdem trägt sie dazu bei, dass der Benutzer ein versehentliches Freigeben des Klobens 27 sofort erkennen kann, da bei einem Entriegeln des Klobens 27 die Auswurffeder 32 den Kloben 27 aus der Klobenaufnahme 25 bewegt. Alternativ zu der Auswurffeder 32 kann die Klobenaufnahme auch mit einer Rasteinrichtung ausgestattet sein, an der der Kloben 27 verrastet werden kann

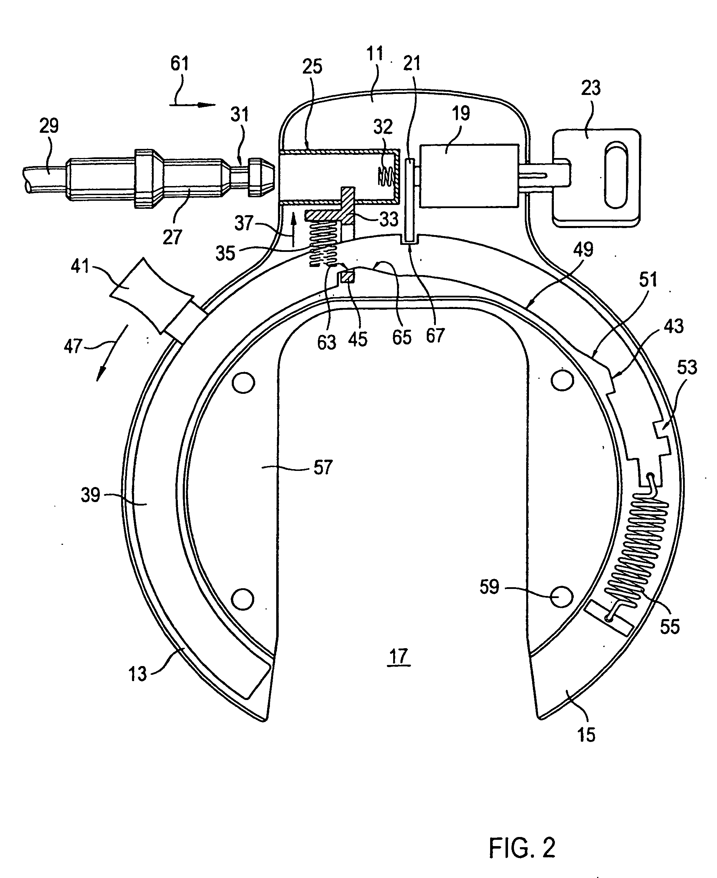

Fig. 2 zeigt in einer vollständig aufgeschnittenen Vorderansicht eine zweite Ausführungsform eines Rahmenschlosses, dessen Rundbügel 39 sich in der Freigabestellung befindet, entsprechend der Darstellung gemäß Fig. 1b.

Im Unterschied zu der ersten Ausführungsform gemäß Fig. 1a und 1b ist hier zusätzlich zu der Freigabeausnehmung 43 an der Innenseite des Rundbügels 39 eine weitere Freigabeausnehmung 63 vorgesehen. Diese ist so angeordnet, dass die Druckfeder 35 den Klobenriegel 33 in die Schließstellung antreiben kann, wenn der Rundbügel vollständig geöffnet ist, wie in Fig. 2 gezeigt. Zwischen der Freigabeausnehmung 43 und der weiteren Freigabeausnehmung 63 erstreckt sich eine Rückhalteerhöhung 49. Der Übergang zwischen dieser Rückhalteerhöhung 49 und der Freigabeausnehmung 43 bildet einen ersten schrägen Zwangsführungsabschnitt 51, und der Übergang zwischen der Rückhalteerhöhung 49 und der weiteren Freigabeausnehmung 63 bildet einen zweiten schrägen Zwangsführungsabschnitt 65.

Somit kann der Kloben 27 nicht nur dann in der Klobenaufnahme 25 gesichert werden, wenn der Rundbügel 39 sich in der Schließstellung befindet, sondern auch dann, wenn der Rundbügel 39 die in Fig. 2 gezeigte Freigabestellung einnimmt. In beiden Fällen vermag der Klobenriegel 33 in die Ringnut 31 des Klobens 27 einzugreifen, wie bereits im Zusammenhang mit der ersten Ausführungsform gemäß Fig. 1a und 1b erläutert. Der Vorteil der in Fig. 2 gezeigten zweiten Ausführungsform besteht also darin, dass der Benutzer den Kloben 27 unabhängig davon an dem Rahmenschloss sichern kann, ob der Rundbügel 39 geschlossen oder geöffnet ist.

Ein Freigeben des Klobens 27 aus der Klobenaufnahme 25 erfolgt bei dieser zweiten Ausführungsform dadurch, dass der Rundbügel 39 von der Schließstellung in die Freigabestellung bewegt wird, oder umgekehrt. Dadurch greift nämlich der erste Zwangsführungsabschnitt 51 oder der zweite Zwangsführungsabschnitt 65 an dem Kopplungshaken 45 an und treibt den Klobenriegel 33 zu einer Freigabebewegung entgegen der Vorspannrichtung 37 an.

Ein weiterer Unterschied zu der ersten Ausführungsform besteht darin, dass der Rundbügel 39 auch in der Freigabestellung gemäß Fig. 2 blockiert werden kann. Hierfür kann der Bügelriegel 21 in Eingriff mit einer weiteren Sperrnut 67 gebracht werden. Dadurch wird verhindert, dass der Rundbügel 39 von einem Unbefugten mittels der Handhabe 41 aus der Freigabestellung gemäß Fig. 2 in die Schließstellung überführt wird, wodurch aufgrund des Zusammenwirkens des zweiten Zwangsführungsabschnitts 65 mit dem Kopplungshaken 45 der Klobenriegel 33 aus der Klobenaufnahme 25 zurückgezogen und dadurch der Kloben 27 freigegeben würde.

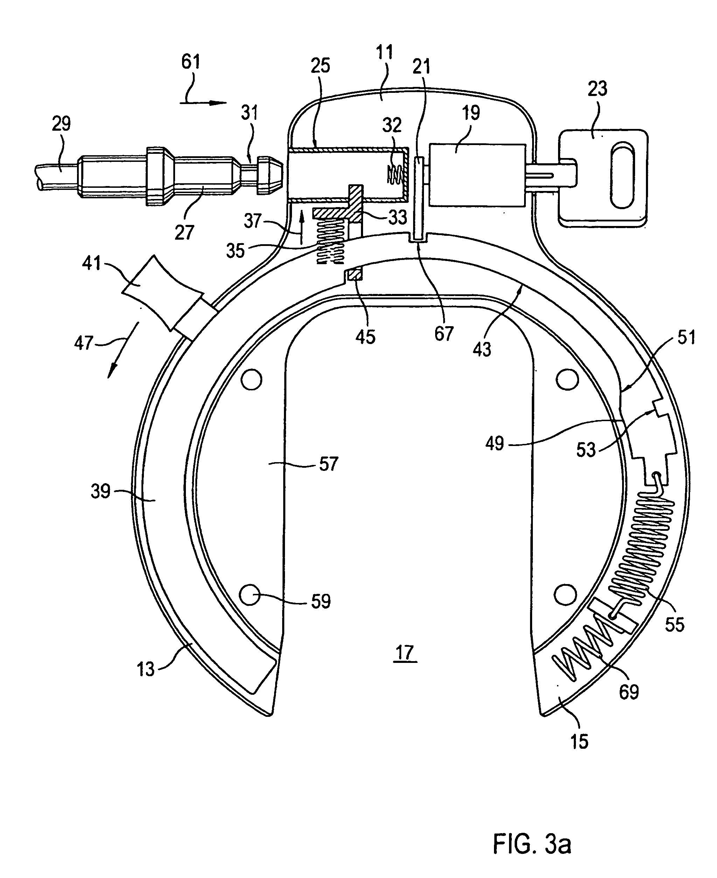

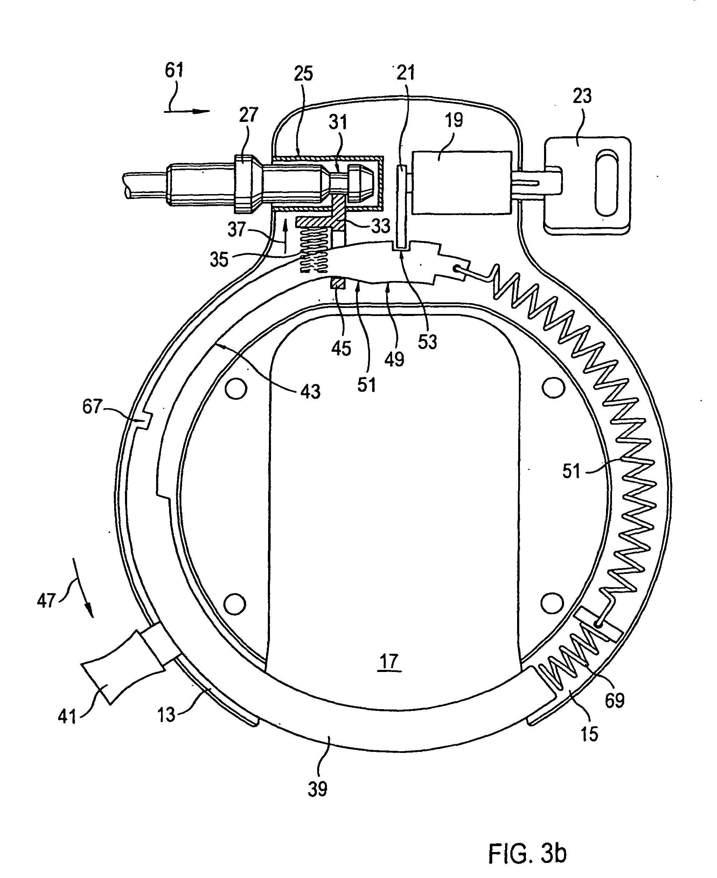

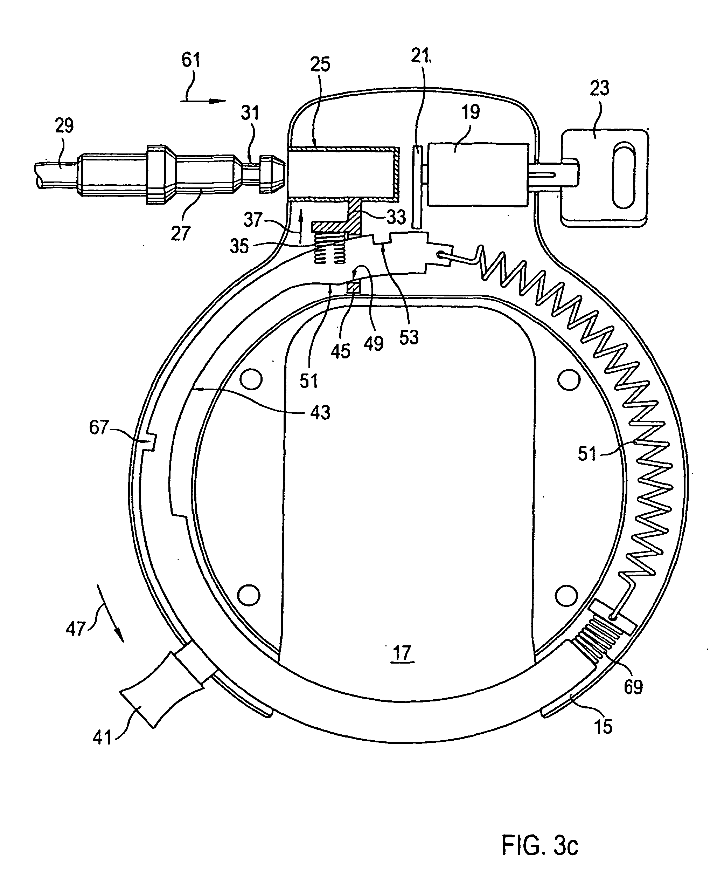

Fig. 3a, 3b und 3c zeigen jeweils in einer aufgeschnittenen Vorderansicht eine dritte Ausführungsform eines Rahmenschlosses, wobei der Rundbügel 39 sich in der Freigabestellung, der Schließstellung bzw. einer Klobenentriegelungsstellung befindet.

Im Unterschied zu der ersten Ausführungsform gemäß Fig. 1a und 1b ist hier die Freigabeausnehmung 43 dergestalt erweitert, dass der Kopplungshaken 45 in der Freigabestellung des Rundbügels 39 (Fig. 3a), in der Schließstellung des Rundbügels (Fig. 3b) und in jeder Zwischenstellung innerhalb der Freigabeausnehmung 43 ruht. Dadurch ist in jeder dieser Stellungen des Rundbügels 39 ein Verriegeln des Klobens 27 in der Klobenaufnahme 25 möglich. Hierfür vermag der Klobenriegel 33 in die Ringnut 31 des Klobens 27 einzuschnappen, wie im Zusammenhang mit der ersten Ausführungsform erläutert.

Ein nachfolgendes Freigeben des Klobens 27 aus der Klobenaufnahme 25 wird bei der dritten Ausführungsform dadurch bewerkstelligt, dass der Rundbügel 39 mittels der Handhabe 41 über die Schließstellung (Fig. 3b) hinaus entlang der Schließrichtung 47 in eine Klobenentriegelungsstellung gebracht wird, wie in Fig. 3c gezeigt. Aufgrund dieser zusätzlichen Bewegung des Rundbügels 39 greift der Zwangsführungsabschnitt 51 an dem Kopplungshaken 45 an und zieht somit den Klobenriegel 33 entgegen der Vorspannrichtung 37 aus der Klobenaufnahme 25 heraus in eine Freigabestellung. Der Kloben 27 kann nun entgegen der Einführrichtung 21 aus der Klobenaufnahme 25 entnommen werden.

Diese zusätzliche Klobenentriegelungsbewegung des Rundbügels 39 ist nur möglich, wenn der Benutzer den Rundbügel 39 aufgrund einer entsprechenden Betätigung des Schließzylinders 19 und somit des Bügelriegels 21 freigegeben hat. Diese Ausführungsform hat also den Vorteil, dass das Freigeben des Klobens 27 aus der Klobenaufnahme 25 nicht unbeabsichtigt oder unbemerkt geschehen kann. Stattdessen muss der Benutzer die Handhabe 41 kurzeitig bewusst über die reguläre Schließstellung des Rundbügels 39 hinaus bewegen.

Um dem Benutzer noch deutlicher anzuzeigen, dass er den Rundbügel 39 gerade über die Schließstellung hinaus in die Klobenentriegelungsstellung bewegt, kann innerhalb des Aufnahmeschenkels 15 eine optionale Konterfeder 69 angeordnet sein, an der der Rundbügel 39 anstößt, sobald er über die Schließstellung gemäß Fig. 3b hinaus bewegt worden ist. Der Benutzer muss für ein Freigeben des Klobens 27 aus der Klobenaufnahme 25 also zusätzlich den Gegendruck der Konterfeder 69 überwinden.

Zu der dritten Ausführungsform ist noch anzumerken, dass auch hier eine weitere Sperrnut 67 zum Blockieren des Rundbügels 39 in der Freigabestellung gemäß Fig. 3a vorgesehen sein kann. Dies ist jedoch nicht zwingend erforderlich.

Außerdem ist zu der dritten Ausführungsform noch anzumerken, dass die Ausgestaltung des Rundbügels 39 mit Freigabeausnehmung 43, Zwangsführungsabschnitt 51 und Rückhalteerhöhung 49 auch invertiert werden kann, so dass der Klobenriegel 33 dadurch in seine Freigabestellung zurückgezogen wird, dass der Rundbügel 39 entgegen der Schließrichtung 47 über die Freigabestellung gemäß Fig. 3a hinaus in eine Klobenentriegelungsstellung bewegt wird.

Auch bei der erläuterten zweiten und dritten Ausführungsform kann in oder an der Klobenaufnahme 25 eine Auswurffeder 32 oder eine Rasteinrichtung vorgesehen sein, wie im Zusammenhang mit Fig. 1a und 1b erläutert.

Zu sämtlichen der vorstehend erläuterten Ausführungsformen ist auch noch zu bemerken, dass - anstelle des gezeigten Angreifens des Klobenriegels 33 an der Innenseite des Rundbügels 39 - der Zwangsführungsabschnitt 51, 65 auch an der Krümmungsaußenseite des Rundbügels 39 ausgebildet sein kann. Bei einem derartigen Aufbau ist der Klobenriegel 33 vorzugsweise in Richtung des Rundbügels 39 vorgespannt. Wenn dann ein unteres Kopplungselement des Klobenriegels 33 in eine Ausnehmung des Rundbügels 39 eintritt, gelangt der Klobenriegel 33 aufgrund der Vorspannung in die Schließstellung, und der Klobenriegel 33 greift, beispielsweise über einen Verlängerungsabschnitt, von oben in die Klobenaufnahme 25 ein.

### Bezugzeichenliste

- 11: Basisabschnitt
- 13: Lagerschenkel
- 15: Aufnahmeschenkel
- 17: Schließbereich
- 19: Schließzylinder
- 21: Bügelriegel
- 23: Schlüssel
- 25: Klobenaufnahme
- 27: Kloben
- 29: Sicherungsseil
- 31: Ringnut
- 32: Auswurffeder
- 33: Klobenriegel
- 35: Druckfeder
- 37: Vorspannrichtung
- 39: Rundbügel
- 41: Handhabe
- 43: Freigabeausnehmung
- 45: Kopplungshaken
- 47: Schließrichtung
- 49: Rückhalteerhöhung
- 51: (erster) Zwangsführungsabschnitt
- 53: Sperrnut
- 55: Zugfeder
- 57: Versteifungsfläche
- 59: Verbindungsniet
- 61: Einführrichtung
- 63: weitere Freigabeausnehmung
- 65: zweiter Zwangsführungsabschnitt
- 67: weitere Sperrnut
- 69: Konterfeder

## Patentansprüche

1. Rahmenschloss für ein Zweirad,
mit einem Lagerschenkel (13) und einem Aufnahmeschenkel (15), die einen Schließbereich (17) zur Aufnahme eines Speichenrads umgeben,
ferner mit einem Rundbügel (39), der in oder an dem Lagerschenkel gelagert ist und der bewegbar ist zwischen einer Freigabestellung, in der der Schließbereich (17) des Rahmenschlosses freigegeben ist, und einer Schließstellung, in der der Rundbügel (39) den Schließbereich durchquert und von dem Aufnahmeschenkel aufgenommen wird,
ferner mit einer Verriegelungseinrichtung (19, 21) zum Verriegeln oder Freigeben des Rundbügels,
ferner mit einer Klobenaufnahme (25) zum Aufnehmen eines Klobens (27) eines Sicherungsseils (29) entlang einer Einführrichtung (61), und
mit einem Sicherungselement (33), das bewegbar ist zwischen einer Freigabestellung, in der der Kloben für eine Entnahme aus der Klobenaufnahme freigegeben ist, und einer Schließstellung, in der das Sicherungselement den in der Klobenaufnahme befindlichen Kloben gegen eine Entnahme sichert,
**dadurch gekennzeichnet,**
**dass** an dem Rundbügel (39) wenigstens ein Zwangsführungsabschnitt (51, 65) ausgebildet ist, der bei einer Bewegung des Rundbügels eine Bewegung des Sicherungselements (33) in die Freigabestellung oder in die Schließstellung bewirkt.

2. Rahmenschloss nach Anspruch 1,
**dadurch gekennzeichnet,**
**dass** der Zwangsführungsabschnitt (51, 65) durch einen Übergang zwischen einer Ausnehmung (43, 63) und einer Erhöhung (49) des Rundbügels gebildet ist.

3. Rahmenschloss nach einem der vorhergehenden Ansprüche,
**dadurch gekennzeichnet,**
**dass** das Sicherungselement (33) durch eine Feder (35) vorgespannt ist.

4. Rahmenschloss nach Anspruch 3,
**dadurch gekennzeichnet,**
**dass** das Sicherungselement (33) durch eine Druckfeder (35) und/oder in Richtung (37) der Schließstellung vorgespannt ist.

5. Rahmenschloss nach einem der vorhergehenden Ansprüche,
**dadurch gekennzeichnet,**
**dass** der Zwangsführungsabschnitt (51) mit dem Sicherungselement (33) dergestalt zusammenwirkt, dass das Sicherungselement für eine Bewegung in die Schließstellung freigegeben wird, wenn der Rundbügel (39) in die Schließstellung bewegt wird, und dass das Sicherungselement in die Freigabestellung bewegt wird, wenn der Rundbügel (39) in die Freigabestellung bewegt wird.

6. Rahmenschloss nach Anspruch 5,
**dadurch gekennzeichnet,**
**dass** an ein Ende des Zwangsführungsabschnitts (51) eine Freigabeausnehmung (43) des Rundbügels (39) angrenzt, die das Sicherungselement (33) für eine Bewegung in die Schließstellung freigibt, wenn der Rundbügel in die Schließstellung bewegt worden ist, und dass an das andere Ende des Zwangsführungsabschnitts (51) eine Rückhalteerhöhung (49) des Rundbügels (39) angrenzt, von der das Sicherungselement (33) in der Freigabestellung gehalten wird, wenn der Rundbügel in die Freigabestellung bewegt worden ist.

7. Rahmenschloss nach einem der Ansprüche 1 bis 4,
**dadurch gekennzeichnet,**
**dass** zwei Zwangsführungsabschnitte (51, 65) mit dem Sicherungselement (33) dergestalt zusammenwirken, dass das Sicherungselement für eine Bewegung in die Schließstellung freigegeben wird, wenn der Rundbügel (39) in die Schließstellung oder in die Freigabestellung bewegt wird, und dass das Sicherungselement in die Freigabestellung bewegt wird, wenn der Rundbügel (39) in eine Zwischenstellung zwischen der Schließstellung und der Freigabestellung bewegt wird.

8. Rahmenschloss nach Anspruch 7,
**dadurch gekennzeichnet,**
**dass** an ein Ende eines ersten Zwangsführungsabschnitts (51) eine Freigabeausnehmung (43) des Rundbügels (39) angrenzt, die das Sicherungselement (33) für eine Bewegung in die Schließstellung freigibt, wenn der Rundbügel in die Schließstellung bewegt worden ist, dass an das andere Ende des ersten Zwangsführungsabschnitts (51) einerseits und an ein Ende eines zweiten Zwangsführungsabschnitts (65) andererseits eine Rückhalteerhöhung (49) des Rundbügels (39) angrenzt, von der das Sicherungselement (33) in der Freigabestellung gehalten wird, wenn der Rundbügel in die Zwischenstellung bewegt worden ist, und
**dass** an das andere Ende des zweiten Zwangsführungsabschnitts (65) eine weitere Freigabeausnehmung (63) des Rundbügels (39) angrenzt, die das Sicherungselement (33) für eine Bewegung in die Schließstellung freigibt, wenn der Rundbügel in die Freigabestellung bewegt worden ist.

9. Rahmenschloss nach einem der Ansprüche 7 oder 8,
**dadurch gekennzeichnet,**
**dass** der Rundbügel (39) sowohl in der Schließstellung als auch in der Freigabestellung verriegelbar ist.

10. Rahmenschloss nach einem der Ansprüche 1 bis 4,
**dadurch gekennzeichnet,**
**dass** der Rundbügel (39) über die Schließstellung oder die Freigabestellung hinaus in eine Klobenentriegelungsstellung bewegbar ist, und
**dass** der Zwangsführungsabschnitt (51) mit dem Sicherungselement (33) dergestalt zusammenwirkt, dass das Sicherungselement für eine Bewegung in die Schließstellung freigegeben wird, wenn der Rundbügel in die Schließstellung oder in die Freigabestellung bewegt wird, und dass das Sicherungselement in die Freigabestellung bewegt wird, wenn der Rundbügel in die Klobenentriegelungsstellung bewegt wird.

11. Rahmenschloss nach Anspruch 10,
**dadurch gekennzeichnet,**
**dass** an ein Ende des Zwangsführungsabschnitts (51) eine Freigabeausnehmung (43) des Rundbügels (39) angrenzt, die das Sicherungselement (33) für eine Bewegung in die Schließstellung freigibt, wenn der Rundbügel in die Schließstellung oder in die Freigabestellung bewegt worden ist, und
**dass** an das andere Ende des Zwangsführungsabschnitts (51) eine Rückhalteerhöhung (49) des Rundbügels (39) angrenzt, von der das Sicherungselement (33) in der Freigabestellung gehalten wird, wenn der Rundbügel in die Klobenentriegelungsstellung bewegt worden ist.

12. Rahmenschloss nach einem der vorhergehenden Ansprüche,
**dadurch gekennzeichnet,**
**dass** die Verriegelungseinrichtung (19) über einen Riegel (21) mit dem Rundbügel (39) zusammenwirkt.

13. Rahmenschloss nach einem der vorhergehenden Ansprüche,
**dadurch gekennzeichnet,**
**dass** der Rundbügel (39) durch eine Feder (55) vorgespannt ist.

14. Rahmenschloss nach Anspruch 13,
**dadurch gekennzeichnet,**
**dass** der Rundbügel (39) durch eine Zugfeder (55) und/oder in Richtung der Freigabestellung vorgespannt ist.

15. Rahmenschloss nach einem der vorhergehenden Ansprüche,
**dadurch gekennzeichnet,**
**dass** in der Klobenaufnahme (25) eine Auswurffeder (32) vorgesehen ist.

16. Rahmenschloss nach einem der vorhergehenden Ansprüche,
**dadurch gekennzeichnet,**
**dass** an der Klobenaufnahme (25) eine Rasteinrichtung vorgesehen ist, an der der Kloben (27) verrastbar ist.

17. Zweirad-Sicherungssystem mit einem Rahmenschloss nach einem der vorhergehenden Ansprüche und mit einem Sicherungsseil (29), dessen Kloben (27) an dem Rahmenschloss sicherbar ist.

## Claims

1. A frame lock for a two-wheeler,
having a bearing limb (13) and a receiving limb (15) which surround a closing region (17) for the reception of a spoke wheel,
furthermore having a round hoop (39) which is supported in or at the bearing limb and which is movable between a release position, in which the closing region (17) of the frame lock is released, and a closed position, in which the round hoop (39) passes through the closing region and is received by the receiving limb,
furthermore having a latching device (19, 21) for the latching or releasing of the round hoop,
furthermore having a latch bolt reception (25) for the reception of a latch bolt (27) of a securing cable (29) along an introduction direction (61), and
having a securing element (33) which is movable between a release position, in which the latch bolt is released for a removal from the latch bolt reception, and a closed position, in which the securing element secures the latch bolt located in the latch bolt reception against a removal,
**characterised in that**
at least one compulsory guide section (51, 65) is formed at the round hoop (39) and effects a movement of the securing element (33) into the release position or into the closed position on a movement of the round hoop.

2. A frame lock in accordance with claim 1, **characterised in that** the compulsory guide section (51, 65) is formed by a transition between a recess (43, 63) and a projection (49) of the round hoop.

3. A frame lock in accordance with any one of the preceding claims, **characterised in that** the securing element (33) is biased by a spring (35).

4. A frame lock in accordance with claim 3, **characterised in that** the securing element (33) is biased by a compression spring (35) and/or is biased in the direction (37) of the closed position.

5. A frame lock in accordance with any one of the preceding claims, **characterised in that** the compulsory guide section (51) cooperates with the securing element (33) such that the securing element is released for a movement into the closed position when the round hoop (39) is moved into the closed position; and **in that** the securing element is moved into the release position when the round hoop (39) is moved into the release position.

6. A frame lock in accordance with claim 5, **characterised in that** a release recess (43) of the round hoop (39) adjoins an end of the compulsory guide section (51) and releases the securing element (33) for a movement into the closed position when the round hoop has been moved into the closed position; and **in that** a retaining projection (49) of the round hoop (39) adjoins the other end of the compulsory guide section (51) and the securing element (33) is held by it in the release position when the round hoop has been moved into the release position.

7. A frame lock accordance with any one of claims 1 to 4, **characterised in that** two compulsory guide sections (51, 65) cooperate with the securing element (33) such that the securing element is released for a movement into the closed position when the round hoop (39) is moved into the closed position or into the release position; and **in that** the securing element is moved into the release position when the round hoop (39) is moved into an intermediate position between the closed position and the release position.

8. A frame lock in accordance with claim 7, **characterised in that** a release recess (43) of the round hoop (39) adjoins an end of a first compulsory guide section (51) and releases the securing element (33) for a movement into the closed position when the round hoop has been moved into the closed position; **in that** a retaining projection (49) of the round hoop (39) adjoins the other end of the first compulsory guide section (51), on the one hand, and an end of a second compulsory guide section (65), on the other hand, and the securing element (33) is held by it in the release position when the round hoop has been moved into the intermediate position; and **in that** a further release recess (63) of the round hoop (39) adjoins the other end of the second compulsory guide section (65) and releases the securing element (33) for a movement into the closed position when the round hoop has been moved into the release position.

9. A frame lock in accordance with claim 7 or claim 8, **characterised in that** the round hoop (39) can be latched both in the closed position and in the release position.

10. A frame lock in accordance with any one of the claims 1 to 4, **characterised in that** the round hoop (39) is movable beyond the closed position or the release position into a latch bolt unlatching position; and **in that** the compulsory guide section (51) cooperates with the securing element (33) such that the securing element is released for a movement into the closed position when the round hoop is moved into the closed position or into the release position; and **in that** the securing element is moved into the release position when the round hoop is moved into the latch bolt unlatching position.

11. A frame lock in accordance with claim 10, **characterised in that** a release recess (43) of the round hoop (39) adjoins an end of the compulsory guide section (51) and releases the securing element (33) for a movement into the closed position when the round hoop has been moved into the closed position or into the release position; and **in that** a retaining projection (49) of the round hoop (39) adjoins the other end of the compulsory guide section (51) and the securing element (33) is held by it in the release position when the round hoop has been moved into the latch bolt unlatching position.

12. A frame lock in accordance with any one of the preceding claims, **characterised in that** the latching device (19) cooperates with the round hoop (39) via a latch member (21).

13. A frame lock in accordance with any one of the preceding claims, **characterised in that** the round hoop (39) is biased by a spring (55).

14. A frame lock in accordance with claim 13, **characterised in that** the round hoop (39) is biased by a tension spring (55) and/or is biased in the direction of the release position.

15. A frame lock in accordance with any one of the preceding claims, **characterised in that** an ejection spring (32) is provided in the latch bolt reception (25).

16. A frame lock in accordance with any one of the preceding claims, **characterised in that** a latch device is provided at the latch bolt reception (25) and the latch bolt (27) is latchable thereto.

17. A two-wheeler securing system having a frame lock in accordance with any one of the preceding claims and having a securing cable (29) whose latch bolt (27) can be secured to the frame lock.

## Revendications

1. Serrure à encerclement pour un deux-roues, comportant
- une branche de montage (13) et une branche de réception (15) qui entourent une zone de fermeture (17) pour recevoir une roue à rayons,
- un étrier rond (39) qui est monté dans ou sur la branche de montage et qui est mobile entre une position de libération dans laquelle la zone de fermeture (17) de la Serrure à encerclement est libérée, et une position de fermeture dans laquelle l'étrier rond (39) traverse la zone de fermeture et est reçu par la branche de réception,
- un dispositif de verrouillage (19, 21) pour verrouiller ou libérer l'étrier rond,
- un logement à tenon (25) pour loger un tenon (27) d'un câble de sécurité (29) suivant une direction d'introduction (61), et
- un élément de blocage (33) qui est mobile entre une position de libération dans laquelle le tenon est libéré dans le but d'un enlèvement hors du logement à tenon, et une position de fermeture dans laquelle l'élément de blocage bloque le tenon, situé dans le logement à tenon, à l'encontre d'un enlèvement,
**caractérisée en ce que**
au moins un tronçon de guidage forcé (51, 65) est réalisé sur l'étrier rond (39), tronçon qui, lors d'un mouvement de l'étrier rond, provoque un mouvement de l'élément de blocage (33) dans la position de libération ou dans la position de fermeture.

2. Serrure à encerclement selon la revendication 1, **caractérisée en ce que** le tronçon de guidage forcé (51, 65) est formé par une transition entre un évidement (43, 63) et un bossage (49) de l'étrier rond.

3. Serrure à encerclement selon l'une des revendications précédentes, **caractérisée en ce que** l'élément de blocage (33) est précontraint par un ressort (35).

4. Serrure à encerclement selon la revendication 3, **caractérisée en ce que** l'élément de blocage (33) est précontraint par un ressort de compression (35) et/ou en direction (37) de la position de fermeture.

5. Serrure à encerclement selon l'une des revendications précédentes, **caractérisée en ce que** le tronçon de guidage forcé (51) coopère avec l'élément de blocage (33) de telle sorte que l'élément de blocage est libéré pour un mouvement dans la position de fermeture lorsque l'étrier rond (39) est déplacé dans la position de fermeture, et **en ce que** l'élément de blocage est déplacé dans la position de libération lorsque l'étrier rond (39) est déplacé dans la position de libération.

6. Serrure à encerclement selon la revendication 5, **caractérisée en ce qu'**un évidement de libération (43) de l'étrier rond (39) est adjacent à une extrémité du tronçon de guidage forcé (51), évidement qui libère l'élément de blocage (33) pour un mouvement dans la position de fermeture lorsque l'étrier rond a été déplacé dans la position de fermeture, et **en ce qu'**un bossage de retenue (49) de l'étrier rond (39) est adjacent à l'autre extrémité du tronçon de guidage forcé (51), bossage par lequel l'élément de blocage (33) est retenu dans la position de libération lorsque l'étrier rond a été déplacé dans la position de libération.

7. Serrure à encerclement selon l'une des revendications 1 à 4, **caractérisée en ce que** deux tronçons de guidage forcé (51, 65) coopèrent avec l'élément de blocage (33) de telle sorte que l'élément de blocage est libéré pour un mouvement dans la position de fermeture lorsque l'étrier rond (39) est déplacé dans la position de fermeture ou dans la position de libération, et **en ce que** l'élément de blocage est déplacé dans la position de libération lorsque l'étrier rond (39) est déplacé dans une position intermédiaire entre la position de fermeture et la position de libération.

8. Serrure à encerclement selon la revendication 7, **caractérisée en ce qu'**un évidement de libération (43) de l'étrier rond (39) est adjacent à une extrémité du premier tronçon de guidage forcé (51), évidement qui libère l'élément de blocage (33) pour un mouvement dans la position de fermeture lorsque l'étrier rond a été déplacé dans la position de fermeture, et **en ce qu'**un bossage de retenue (49) de l'étrier rond (39) est adjacent d'une part à l'autre extrémité du premier tronçon de guidage forcé (51) et d'autre part à une extrémité du second tronçon de guidage forcé (65), bossage par lequel l'élément de blocage (33) est retenu dans la position de libération lorsque l'étrier rond a été déplacé dans la position intermédiaire, et
**en ce qu'**un autre évidement de libération (63) de l'étrier rond (39) est adjacent à l'autre extrémité du second tronçon de guidage forcé (65), évidement qui libère l'élément de blocage (33) pour un mouvement dans la position de fermeture lorsque l'étrier rond a été déplacé dans la position de fermeture.

9. Serrure à encerclement selon l'une ou l'autre des revendications 7 et 8, **caractérisée en ce que** l'étrier rond (39) est susceptible d'être verrouillé aussi bien dans la position de fermeture que dans la position de libération.

10. Serrure à encerclement selon l'une des revendications 1 à 4, **caractérisée en ce que** l'étier rond (39) est mobile au-delà de la position de fermeture ou de la position de libération jusque dans une position de déverrouillage de tenon, et **en ce que** le tronçon de guidage forcé (51) coopère avec l'élément de blocage (33) de telle sorte que l'élément de blocage est libéré pour un mouvement dans la position de fermeture lorsque l'étrier rond est déplacé dans la position de fermeture ou dans la position de libération, et **en ce que** l'élément de blocage est déplacé dans la position de libération lorsque l'étrier rond est déplacé dans la position de déverrouillage de tenon.

11. Serrure à encerclement selon la revendication 10, **caractérisée en ce qu'**un évidement de libération (43) de l'étrier rond (39) est adjacent à une extrémité du tronçon de guidage forcé (51), évidement qui libère l'élément de blocage (33) pour un mouvement dans la position de fermeture lorsque l'étrier rond a été déplacé dans la position de fermeture ou dans la position de libération, et **en ce qu'**un bossage de retenue (49) de l'étrier rond (39) est adjacent à l'autre extrémité du tronçon de guidage forcé (51), bossage par lequel l'élément de blocage (33) est retenu dans la position de libération lorsque l'étrier rond a été déplacé dans la position de déverrouillage de tenon.

12. Serrure à encerclement selon l'une des revendications précédentes, **caractérisée en ce que** le dispositif de verrouillage (19) coopère avec l'étrier rond (39) via un pêne (21).

13. Serrure à encerclement selon l'une des revendications précédentes, **caractérisée en ce que** l'étrier rond (39) est précontraint par un ressort (55).

14. Serrure à encerclement selon la revendication 13, **caractérisée en ce que** l'étrier rond (39) est précontraint par un ressort de traction (55) et/ou en direction de la position de libération.

15. Serrure à encerclement selon l'une des revendications précédentes, **caractérisée en ce qu'**il est prévu un ressort d'éjection (32) dans le logement à tenon (25).

16. Serrure à encerclement selon l'une des revendications précédentes, **caractérisée en ce qu'**il est prévu un dispositif d'enclenchement dans le logement à tenon (25), sur lequel peut venir s'enclencher le tenon (27).

17. Système de blocage de deux-roues comportant une Serrure à encerclement selon l'une des revendications précédentes et comportant un câble de sécurité (29) dont le tenon (27) est susceptible d'être bloqué sur la Serrure à encerclement.
